(19) Europäisches Patentamt
European Patent Office
Office européen des brevets

(11) **EP 3 971 628 B1**

(12) **EUROPEAN PATENT SPECIFICATION**

(45) Date of publication and mention
of the grant of the patent:
**07.01.2026 Bulletin 2026/02**

(21) Application number: **20197593.5**

(22) Date of filing: **22.09.2020**

(51) International Patent Classification (IPC):
**G02B 27/01** (2006.01)  **G02B 5/02** (2006.01)
**G02B 26/10** (2006.01)

(52) Cooperative Patent Classification (CPC):
**G02B 27/0103;** G02B 26/101; G02B 2027/0116;
G02B 2027/0118; G02B 2027/0154

(54) **HEAD-UP DISPLAY**

HEAD-UP-ANZEIGE

AFFICHAGE TÊTE HAUTE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**23.03.2022 Bulletin 2022/12**

(73) Proprietor: **Valeo Comfort and Driving Assistance
94000 Créteil (FR)**

(72) Inventors:
• **MERMILLOD, Pierre
94046 Créteil CEDEX (FR)**
• **MCDONALD, Gus
94046 Créteil CEDEX (FR)**

(74) Representative: **Delplanque, Arnaud
Valeo Comfort and Driving Assistance
6 rue Daniel Costantini
94000 Créteil (FR)**

(56) References cited:
**EP-A2- 3 032 316** **WO-A1-2020/124627**
**US-A1- 2011 164 294**

**Description**

TECHNICAL FIELD OF THE INVENTION

The invention relates to the field of the see-through displays which display a superimposed image over an ambient outlook, especially in vehicles.
More precisely the invention relates to a Heap-Up Display (HUD).

BACKGROUND INFORMATION AND PRIOR ART

HUDs allow to project images, which are useful for the driver, directly in his field of view. These systems improve the overall safety and security since the driver does not need to look away from the road to access useful information.

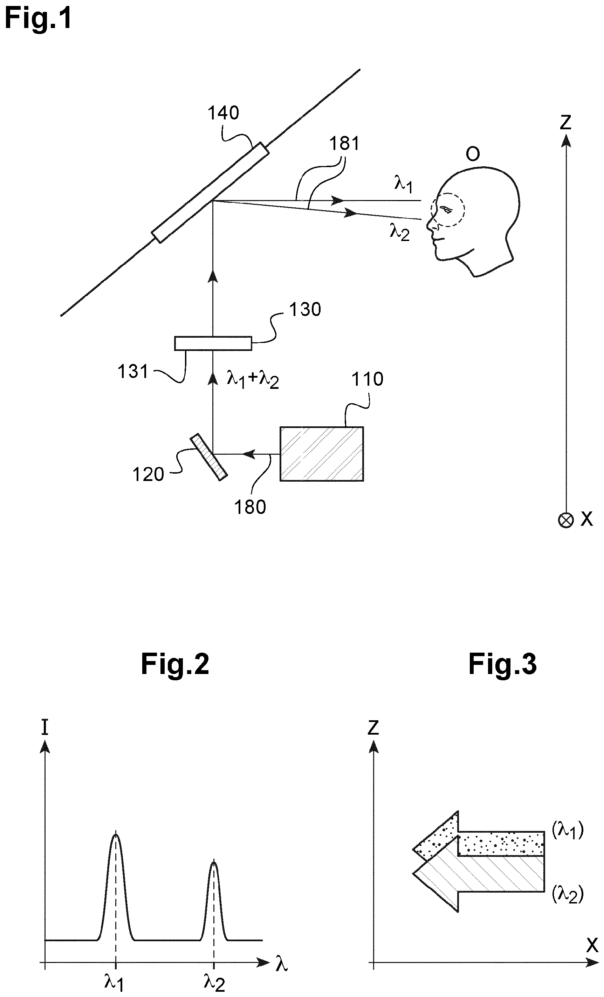

Figure 1 shows a schematic view of a conventional holographic HUD. A conventional holographic HUD usually comprises a picture generating unit and a holographic plate 140. The picture generating unit comprises a light source 110, a scanning element 120 and a diffusing plane 130. Firstly, the light source 110 emits a light beam which is directed toward the scanning element 120, which is rapidly orientable. Secondly, the scanning element 120 rapidly scans the light beam onto the diffusing plane 130 to form an incident beam, which is designed to create an image after reflection on the holographic plate 140. Thirdly, the virtual image formed on the holographic plate 140 propagates toward an observation area O, where are located the eyes of the driver. In the end, the driver sees a virtual image, coming from the picture generating unit, superimposed on the ambient outlook, which he sees directly through the holographic plate 140.
However, a drawback of this technology is the possible blurriness of the virtual image when the light beam comprises wavelengths close to each other's. Lasers used as light sources do not produce highly monochromatic light beams and their spectrum might depend on the intensity of the produced light beam. For example, green lasers often produce two close wavelengths 4 nm apart around 520 nm (for example at 518 and 522 nm). A typical spectrum of such a green laser is represented in figure 2 with $|\lambda_1 - \lambda_2| = 4$ nm. As illustrated in figure 1, at the holographic plate 140, $\lambda_1$ and $\lambda_2$ are reflected with two distinct reflection angles, so in two directions. For example, if an image of an arrow is projected with a light beam comprising $\lambda_1$ and $\lambda_2$, it results in the driver seeing two closely shifted arrows (at two distinct heights), as illustrated in figure 3, instead of one single arrow.
Head-up display systems employing an additional light dispersion system are known from EP 3 032 316 A2 and US 2011/164294 A1.

SUMMARY OF THE INVENTION

In this context, the invention provides a HUD which suitably corrects this effect of image blurring by controlling the reflection angle at the holographic plate to ensure that all contiguous wavelengths have the same direction toward the observation area.
More precisely, the invention proposes a head-up display comprising a light source configured to emit a light beam; a movable scanning element positioned to deflect the light beam ; a pupil expander which receives the deflected light beam and transmits an incident light beam; a holographic plate configured to receive the incident light beam and to reflect a virtual image toward an observation area; wherein at least one dispersive system is positioned in the optical path, between the light source and the scanning element, and at least one focusing system is positioned in the optical path, between the scanning element and the holographic plate.
Indeed, to achieve the goal described above, the HUD needs first to separate the different wavelengths and then to modify their incidence angle on the holographic plate.
Adding more optical elements to a HUD might seem counterproductive a priori, as it could decrease the compactness of the system and make more complex its tuning.
But in practice, adding those two systems to a conventional holographic HUD is an efficient solution to the blurring effect. Indeed, the dispersive system is meant to spatially separate close wavelengths, for example to scatter contiguous wavelengths with a grating, into a plurality of light beams, each comprising one of the wavelengths. The role of the focusing system is to refocus said plurality of light beams onto the holographic plate with distinct incidence angles for each light beam of the plurality. The objective is to reduce the blurring effect by having reflection angles as close as possible for all the plurality of light beams, meaning that all light beams of the plurality are approximatively parallel.
Advantageously, two light beams, corresponding to two distinct wavelengths, hit the hologram plate with two distinct incidence angles, which are chosen in order to reassemble the two light beams after the reflection on the holographic plate. For example, the dispersive system spatially separates the beam comprising $\lambda_1$ and $\lambda_2$, into two light beams. The two beams are then refocused onto the holographic plate with two distinct incidence angles ($\delta_1$ and $\delta_2$) in such a way that they have the same reflection angle $\gamma$. The two beams are reassembled, in the direction of the observation area, so the two virtual images have the same height for the driver, meaning that there is no blurring effect.
According to possible optional features:

- the dispersive system comprises a first subsystem which deviates light depending on the wavelength;
- said first subsystem comprises at least one of the following elements:

    - a prism;

- a diffraction grating;

- said first subsystem is a diffraction grating whose structure is adapted to spread two wavelengths whose difference is inferior to 4 nm;
- the dispersive system comprises a second subsystem, which focuses light beams coming from said first system onto the scanning element;
- said second subsystem comprises at least one of the following elements:

  - a prism;
  - a mirror;

- the focusing element comprises at least one of the following elements:

  - a lens;
  - a mirror;

- the focusing element is positioned in the optical path between the scanning element and the pupil expander;
- the focusing element is positioned in the optical path between the pupil expander and the holographic plate;
- the focusing element is a mirror whose surface is fashioned to compensate an off axis of the optical path;
- the dispersive system is arranged to disperse one light beam comprising two wavelengths into two light beams, each comprising one of said two wavelengths;
- the dispersive system is arranged to make said two light beams incident upon the scanning element with two distinct incidence angles;
- the second subsystem is arranged to make said two light beams incident upon the scanning element substantially at the same position;
- the focusing element is arranged to focus said two light beams on the holographic plate substantially at the same position.

Other features and advantages of the embodiments of the present invention will be better understood upon reading of preferred embodiments thereof with reference to the appended drawings.

BRIEF DESCRIPTION OF THE DRAWINGS

Figure 1 is a schematic view of a conventional **HUD** of a vehicle;

Figure 2 is a graphic representing an emission spectrum with two wavelengths;

Figure 3 is a schematic view of a virtual image produced by a light beam whose spectrum is represented in figure 2;

Figure 4 is a schematic view of a HUD according to the first embodiment;

Figure 5 is a schematic view of a HUD according to the second embodiment.

DETAILED DESCRIPTION OF EXAMPLE(S)

The following description, enriched with appended drawings, that should be taken as non-limitative examples, will help understand the invention and figure out how it can be realized.

Although two embodiments of a HUD according to the invention are shown in the figures, the same reference numbers will be used to throughout the description of these embodiments.

Figure 1 shows a conventional holographic HUD for vehicle comprising three main parts. Its functioning and its drawbacks are described below.

Firstly, a light source 110 emits a light beam 180. This light source is often made of several lasers, for example laser diodes. Three lasers can be used, one for green, one for blue and one for red, and combined to obtain the desired color. The light beams, coming from each laser, are combined thanks to dichroic mirrors to form one light beam 180. A polychromatic spectrum may be obtained by tuning the intensity of each light beam emitted by the lasers. For simplicity of explanations, only the case of green light beam is described herebelow.

Secondly, a scanning element 120 is placed after the light source 110 with respect to the optical path. This scanning element 120 is a movable single plate which can two-dimensionally deflect a light beam. MEMS (Micro-ElectroMechanical System) mirrors are suitably used as scanning elements. The function of the scanning element 120 is to reflect in a temporally predetermined way the light beam to a pupil expander. Here, the pupil expander is a diffusing plane 130. So, the scanning element 120 scans the back surface 131 of the diffusing plane 130 with the light coming from the light source 110. This scanning forms a raster image and thus produces a corresponding light beam emerging from the front face of the diffusing plane 130. This light beam is referred to as "the incident light beam" hereinafter.

Thirdly, the incident beam is reflected, on the holographic plate 140, in the direction of an observation area O where are located the eyes of the driver. In the present embodiment, the holographic plate 140 is a HOE (holographic optical element), for example based on photopolymer layers. Alternatively, this reflecting element may be a DOE (diffracting optical element). This holographic plate 140 is designed and positioned to partially reflect the incident beam of the raster image formed on the diffusing plane 130 toward the observation area O, and to partially transmit light coming from behind it (with respect to the observation area O). For the driver, this results in the formation of a virtual image superimposed on the ambient outlook.

The light source 110, the scanning element 120 and the diffusing plane 130 are located inside the picture generating unit which forms a case (not represented) around them. Such a case protects optical elements against dust or shocks.

Figure 2 represents the emission spectrum of a light beam comprising two wavelengths $\lambda_1$ and $\lambda_2$ distant from each other by few nanometers, typically one to ten nanometers, for example 4 nm in the case a greenlight source emitting at 518 and 522 nm. Such a light beam is emitted by the light source 110 in figure 1. At the holographic plate 140 the light beam 180 is spatially split into two light beams 181, one comprising $\lambda_1$ and the other $\lambda_2$. Indeed, at the holographic plate 140, the reflection angle depends on the wavelength (because a holographic plate is design for one central wavelength). So, the two wavelengths are spatially separated into two light beams 181 and arrive into the observation area O with two distinct directions.

For the driver, this splitting results in not one but two distinct virtual images which are shifted along the Z axis and which may have different intensities. If the image of an arrow is transmitted to the driver with such a HUD and with a light beam 180 made of the two wavelengths $\lambda_1$ and $\lambda_2$, what the driver sees is represented in figure 3. The driver sees one arrow corresponding to $\lambda_1$ and one arrow corresponding to $\lambda_2$. This phenomenon can be referred to as a "ghost image" as one virtual image seems to be the reflection of the other. There is a discrepancy on the virtual images leading to a lack of sharpness of a virtual image.

Another possible case is the one of a single peak spectrum at $\lambda_{max}$ but with a wide peak width, for example ten nanometers. The resulting virtual image is a superposition of different virtual images, coming from the different wavelengths, spread around the image from $\lambda_{max}$, at different position and with different intensities (because the efficiency of a holographic plate depends on the incident wavelength). In this case, the wide peak width causes a blurred virtual image.

The blurring effect is not an inherent issue associated with green light sources but is also present for red and blue light sources. Nevertheless, the blurring effect is less significant if the wavelengths are far apart, for example when comparing red light at 630nm to blue light at 470nm, as the holographic plate will work with one wavelength and will have a very low efficiency (almost zero, in fact) with the other wavelength. Indeed, an hologram associated with a given holographic plate is generally produced for a spectrum range of about 15 nm.

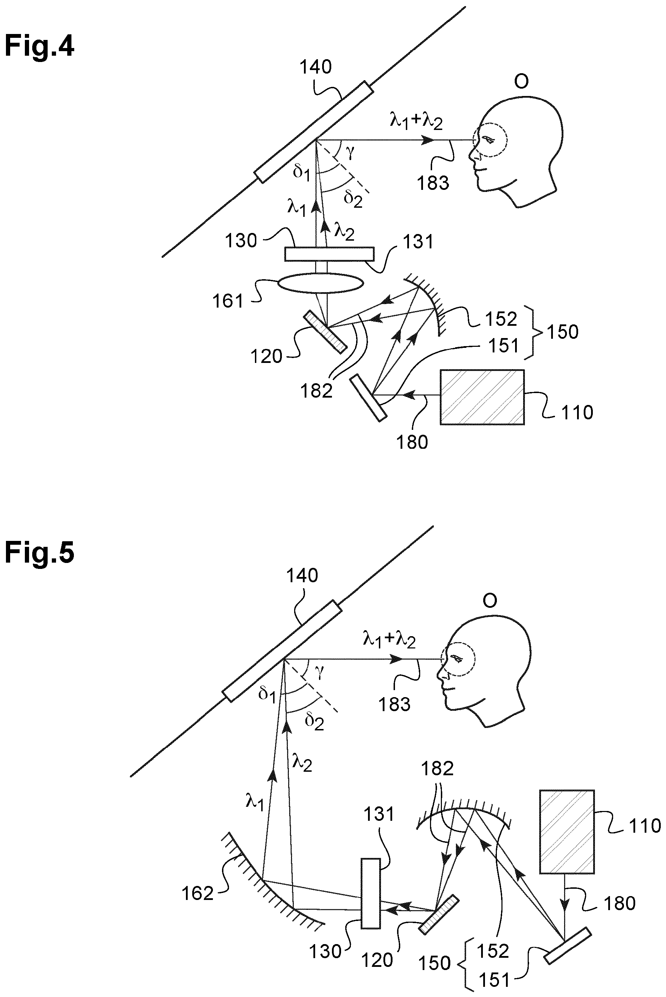

To solve this problem of blurring effect, the invention proposes, as described in figures 4 and 5, a HUD with a dispersive system 150 and a focusing system 161; 162, both placed in the optical path going from the light source 110 to the observation area O. The HUD comprises the parts already described above: a light source 110, a scanning element 120, a diffusing plane 130 and a holographic plate 140, and further comprises a dispersive system 150 and a focusing system 161; 162.

The dispersive system 150 is positioned here in front of the output of the light source 110, so between the light source 110 and the scanning element 120 regarding the optical path. Its role is to split one light beam 180 containing a plurality of wavelengths into a plurality of light beams (in the examples described in figures 4 and 5, the plurality of light beams is represented by two light beams 182), each containing one of the wavelengths. This splitting of the light beam by the dispersive system 150 makes that two light beams 182, corresponding to two distinct wavelengths, are incident upon the scanning element 120 with two distinct incidence angles. The reflection on the scanning element 120 follows the classical optical laws of reflection on mirrors: the reflection angle is equal to the incidence angle. This means that the difference between the reflection angles of the two light beams 182 is equal to the difference between the incidence angles.

In the particular embodiments describes in figures 4 and 5, the two light beams 182 hit the scanning element 120 substantially at the same location, i.e. the surfaces of each beam on the scanning element 120 overlap for more than 90%.

The dispersive system 150 comprises a first subsystem 151, which deviates light depending on the wavelength. The first subsystem 151 is a diffraction grating whose structure is adapted to split wavelengths distant by few nanometers. The diffraction angle $\theta$ is given by the formula:

$$\sin\theta = n \cdot \frac{\lambda}{a}$$

with n the order of diffraction (here $n$ = 1), $\lambda$ the wave-length and a the structure of the grating. A diffraction grating has the advantage to be quite affordable and to reach high diffraction angles. Here the diffraction grating is reflective. As a variation, the diffraction grating may be transmissive.

Alternatively, the first subsystem 151 could be a prism or a combination of prims and diffraction gratings.

The dispersive system 150 comprises a second subsystem 152 for focusing. The second subsystem 152 is positioned in the optical path between the first subsystem 151 and the scanning element 120. The second subsystem 152 focuses the plurality of light beams onto the scanning element 120. The two lights beams 182 converge onto the scanning element 120 and diverge from it after reflection. Focusing the plurality of light beams onto the scanning element 120 allows using only one scanning element 120 instead of several and so keeping the optical system relatively simple and increasing the compactness of the picture generating unit. A solution easy to implement is to use a parabolic shaped mirror positioned in order to have the image of the center of the first subsystem 151 on the center of the scanning element 120. As a variant, the second subsystem 152 can be a lens or a combination of lenses and mirrors.

The holographic plate 140 is here located on the windshield of the vehicle. Alternatively, it could be located on a combiner placed between the windshield and the observation area O.

The role of the focusing system 161,162 will be described further below. But briefly, its role is to focus the plurality of beams onto the holographic plate 140 substantially at the same location, i.e. the surfaces of each beam on the holographic plate 140 overlap for more than 90%. Doing so, all the light beams going from the holographic plate 140 to the observation area O originate from the same point on the holographic plate 140. Having the same origin the holographic plate 140 is a required condition to form one light beam 183 from the plurality of light beams.

The plurality of beams arrives onto the holographic plate 140 with distinct incidence angles for each light beam (for example, with the angles $\delta_1$ and $\delta_2$ in figures 4 and 5). When reflected on the holographic pate 140, every beam of the plurality of light beams has the same reflection angle (the angle $\gamma$ in figures 4 and 5). In this way, the plurality of beams forms only one beam 183, which contains the plurality of wavelengths, after reflection on the holographic plate 140. This results in the driver seeing a unique and sharp virtual image, without blurring effect.

To reassemble the plurality of beams into one beam 183 at the holographic plate 140, the position of the raster image on the diffusing plane 130 can be simulated, for instance. In input of the simulation is the needed differences - in order to reassemble the plurality of light beams into a single light beam 183 - between the incidence angles (for example the difference $|\delta_1 - \delta_2|$ in figures 4 and 5). The simulation gives the position, on the diffusing plane 130, that each light beam of the plurality of light beams should have. Knowing these positions makes it possible to choose the position and the dispersive power of the dispersive system 150, i.e. how much wavelengths must be spread in order to arrive on the holographic plate 140 with the desired incidence angles.

Figure 4 is a schematic view of a HUD according to a first embodiment. The focusing system 161 is positioned in the optical path between the scanning element 120 and the diffusing plane 130. Its role is to focus the plurality of light beams onto the holographic plate 140. Here, the plurality of light beams arrives on the diffusing plane 130 in a converging way. Positioning the focusing system 161 inside the picture generating unit makes it possible to avoid potentially serious sun loads on the HUD.

The focusing system 161 is a lens whose focal is located nearby the holographic plate 140 (if possible at the holographic plate 140). Lenses are preferably positioned inside the picture generating unit as they can concentrate the sunlight in a dangerous manner if not correctly enclosed. The role of the focusing system 161 can also be to perform the desired magnification of the virtual image. According to a possible variation, the focusing system 161 may be a parabolic shaped mirror or a combination of lenses and mirrors.

Figure 5 is a schematic view of a HUD according to a second embodiment. The focusing system 162 is positioned in the optical path between the diffusing plane 130 and the holographic plate 140. Its role is to focus the plurality of light beams, onto the holographic plate 140. Here, the plurality of light beams arrives on the diffusing plane 130 in a diverging way.

The focusing element 162 is a freeform mirror which is centered nearby the holographic plate 140 (if possible on the holographic plate 140). As a variation, the mirror is a plurality of mirrors. Using a freeform mirror allows to correct the off axis of the optical path and to correct aberration due to the shape of the holographic plate 140 (as it can be curved if located on the windshield). The role of the focusing system 162 can also be to perform the desired magnification of the virtual image.

According to a possible variation, the focusing element 162 may be a lens or a combination of mirrors and lenses.

According to both first embodiment (figure 4) and second embodiment (figure 5), a light beam 180 comprising two wavelengths (as in figure 2, for example $\lambda_1$ = 518 *nm* and $\lambda_2$ = *522nm*) causes no blurring effect. Indeed, the dispersive system 150 is arranged to disperse the light beam 180 comprising the two wavelengths ($\lambda_1$ and $\lambda_2$) into two light beams 182, each comprising one of the two wavelengths, i.e. one comprises $\lambda_1$ and the other $\lambda_2$.

Then, the dispersive system 150 is arranged to make the two light beams 182 incident upon the scanning element 120 with two distinct incidence angles. Advantageously, the second subsystem 152 is arranged to make said two light beams 182 incident upon the scanning element 120 substantially at the same position. So, as explained above, two lights beams 182 converging onto the scanning element 120 diverge from it after reflection and the difference between the reflection angles is equal to the difference between the incidence angles.

The focusing element 161,162 is arranged to focus the two light beams 182 on the holographic plate 140 substantially at the same position.

Finally, the previous arrangements of the dispersive system 150 and the focusing system 161,162 make that the two light beams 182 are incident upon the holographic plate 140 with two distinct incidence angles ($\delta_1$ and $\delta_2$), and thanks to a simulation, the incidence angles can be chosen in order to reassemble the two light beams into one single light beam 183 after the reflection on the holographic plate 140. So, the two wavelengths $\lambda_1$

and $\lambda_2$ form a single sharp virtual image for the driver, unlike in the HUD describes in figure 1, which gives two virtual images as represented in figure 3.

## Claims

1. Head-up display comprising:

    - a light source (110) configured to emit a light beam (180);
    - a movable scanning element (120) positioned to deflect the light beam (180);
    - a pupil expander (130) which receives the deflected light beam and transmits an incident light beam;
    - a holographic plate (140) configured to receive the incident light beam and to reflect a virtual image toward an observation area (O);
    - at least one dispersive system (150) positioned in the optical path, between the light source (110) and the scanning element (120),

    **characterised in that** at least one focusing system (161; 162) is positioned in the optical path, between the scanning element (120) and the holographic plate (140).

2. Head-up display according to claim 1, wherein said dispersive system (150) comprises a first subsystem (151) which deviates light depending on the wavelength.

3. Head-up display according to claim 2, wherein said first subsystem comprises at least one of the following elements:

    - a prism;
    - a diffraction grating.

4. Head-up display according to claim 2, wherein said first subsystem (151) is a diffraction grating whose structure is adapted to spread two wavelengths whose difference is inferior to 4 nm.

5. Head-up display according to any of claims 2 to 4, wherein said dispersive system (150) comprises a second subsystem (152), which focuses light beams coming from said first system (151) onto the scanning element (120).

6. Head-up display according to claim 5, wherein said second subsystem (152) comprises at least one of the following elements:

    - a prism;
    - a mirror.

7. Head-up display according to any claims 1 to 6, wherein said focusing element (161; 162) comprises at least one of the following elements:

    - a lens;
    - a mirror.

8. Head-up display according to any of claims 1 to 7, wherein said focusing element (161) is positioned in the optical path between the scanning element (120) and the pupil expander (130).

9. Head-up display according to any of claims 1 to 7, wherein said focusing element (162) is positioned in the optical path between the pupil expander (130) and the holographic plate (140).

10. Head-up display according to claim 1 to 9, wherein said focusing element (161; 162) is a mirror whose surface is fashioned to compensate an off-axis optical path.

11. Head-up display according to any claims of 1 to 10, wherein said dispersive system (150) is arranged to disperse one light beam (180) comprising two wavelengths into two light beams (182), each comprising one of said two wavelengths.

12. Head-up display according to claim 11, wherein said dispersive system (150) is arranged to make said two light beams (182) incident upon the scanning element (120) with two distinct incidence angles.

13. Head-up display according to any of claims 11 to 12, when dependent upon claims 5 or 6, wherein said second subsystem (152) is arranged to make said two light beams (182) incident upon the scanning element (120) substantially at the same position.

14. Head-up display according to any of claims 11 to 13, wherein said focusing element is arranged to focus said two light beams (182) on the holographic plate (140) substantially at the same position.

15. Head-up display according to claim of 14, wherein said two light beams (182) are incident upon the holographic plate (140) with two distinct incidence angles, which are chosen in order to reassemble said two light beams into one single light beam (183) after the reflection on the holographic plate (140).

## Patentansprüche

1. Head-Up-Anzeige, die Folgendes umfasst:

    - eine Lichtquelle (110), die zum Emittieren eines Lichtstrahls (180) konfiguriert ist;
- ein bewegliches Scanelement (120), das zum Ablenken des Lichtstrahls (180) positioniert ist;
- einen Pupillenerweiterer (130), der den abgelenkten Lichtstrahl empfängt und einen einfallenden Lichtstrahl transmittiert;
- eine holografische Platte (140), die zum Empfangen des einfallenden Lichtstrahls und zum Reflektieren eines virtuellen Bildes zu einem Beobachtungsbereich (O) konfiguriert ist;
- wenigstens ein dispersives System (150), das in dem optischen Pfad zwischen der Lichtquelle (110) und dem Scanelement (120) positioniert ist,

**dadurch gekennzeichnet, dass**
wenigstens ein Fokussierungssystem (161; 162), das in dem optischen Pfad zwischen dem Scanelement (120) und der holografischen Platte (140) positioniert ist,

2. Head-Up-Anzeige nach Anspruch 1, wobei das dispersive System (150) ein erstes Subsystem (151) umfasst, das Licht in Abhängigkeit von der Wellenlänge ablenkt.

3. Head-Up-Anzeige nach Anspruch 2, wobei das erste Subsystem wenigstens eines der folgenden Elemente umfasst:

   - ein Prisma;
   - ein Beugungsgitter.

4. Head-Up-Anzeige nach Anspruch 2, wobei das erste Subsystem (151) ein Beugungsgitter ist, dessen Struktur zum Spreizen von zwei Wellenlängen eingerichtet ist, deren Differenz kleiner als 4 nm ist.

5. Head-Up-Anzeige nach einem der Ansprüche 2 bis 4, wobei das dispersive System (150) ein zweites Subsystem (152) umfasst, das Lichtstrahlen, die von dem ersten System (151) stammen, auf das Scanelement (120) fokussiert.

6. Head-Up-Anzeige nach Anspruch 5, wobei das zweite Subsystem (152) wenigstens eines der folgenden Elemente umfasst:

   - ein Prisma;
   - einen Spiegel.

7. Head-Up-Anzeige nach einem der Ansprüche 1 bis 6, wobei das Fokussierungselement (161; 162) wenigstens eines der folgenden Elemente umfasst:

   - eine Linse;
   - einen Spiegel.

8. Head-Up-Anzeige nach einem der Ansprüche 1 bis 7, wobei das Fokussierungselement (161) in dem optischen Pfad zwischen dem Scanelement (120) und dem Pupillenerweiterer (130) positioniert ist.

9. Head-Up-Anzeige nach einem der Ansprüche 1 bis 7, wobei das Fokussierungselement (162) in dem optischen Pfad zwischen dem Pupillenerweiterer (130) und der holografischen Platte (140) positioniert ist.

10. Head-Up-Anzeige nach Anspruch 1 bis 9, wobei das Fokussierungselement (161; 162) ein Spiegel ist, dessen Oberfläche zum Kompensieren eines achsenfernen optischen Pfades gestaltet ist.

11. Head-Up-Anzeige nach einem der Ansprüche 1 bis 10, wobei das dispersive System (150) zum Dispergieren eines Lichtstrahls(180), der zwei Wellenlängen umfasst, in zwei Lichtstrahlen (182) eingerichtet ist, die jeweils eine der zwei Wellenlängen umfassen.

12. Head-Up-Anzeige nach Anspruch 11, wobei das dispersive System (150) dazu eingerichtet ist, die zwei Lichtstrahlen (182) auf das Scanelement (120) mit zwei distinkten Einfallswinkeln einfallen zu lassen.

13. Head-Up-Anzeige nach einem der Ansprüche 11 bis 12, wenn abhängig von Ansprüchen 5 oder 6, wobei das zweite Subsystem (152) zum Bewirken davon eingerichtet ist, dass die zwei Lichtstrahlen (182) auf das Scanelement (120) an im Wesentlichen derselben Position einfallen.

14. Head-Up-Anzeige nach einem der Ansprüche 11 bis 13, wobei das Fokussierungselement zum Fokussieren der zwei Lichtstrahlen (182) auf die holografische Platte (140) an im Wesentlichen derselben Position eingerichtet ist.

15. Head-Up-Anzeige nach Anspruch 14, wobei die zwei Lichtstrahlen (182) auf die holografische Platte (140) mit zwei distinkten Einfallswinkeln einfallen, die gewählt werden, um die zwei Lichtstrahlen nach der Reflexion an der holografischen Platte (140) wieder zu einem einzigen Lichtstrahl (183) zusammenzufügen.

**Revendications**

1. Afficheur tête haute comprenant :

   - une source de lumière (110) agencée pour émettre un faisceau de lumière (180) ; et
   - un élément de balayage mobile (120) disposé pour dévier le faisceau lumineux (180),

- un expanseur pupillaire (130) qui reçoit le faisceau lumineux dévié et transmet un faisceau de lumière incident ;

- Une lame holographique (140) configurée pour recevoir le faisceau lumineux incident et pour réfléchir une image virtuelle vers une zone d'observation (O) ;

- au moins un système dispersif (150) disposé dans le chemin optique, entre la source de lumière (110) et l'élément de balayage (120),

**caractérisé en ce que**

au moins un système de focalisation (161 ; 162) est positionné dans le trajet optique, entre l'élément de balayage (120) et la plaque holographique (140).

2. Affichage tête haute selon la revendication 1, dans lequel ledit système dispersif (150) comprend un premier sous-système (151) qui dévie la lumière en fonction de la longueur d'onde.

3. Afficheur tête haute selon la revendication 2, dans lequel ledit premier sous-système comprend au moins un des éléments suivants :

- un prisme ;
- un réseau de diffraction.

4. Affichage tête haute selon la revendication 2, dans lequel ledit premier sous-système (151) est un réseau de diffraction dont la structure est adaptée pour étaler deux longueurs d'onde dont la différence est inférieure à 4 nm.

5. Affichage tête haute selon l'une quelconque des revendications 2 à 4, dans lequel ledit système dispersif (150) comprend un deuxième sous-système (152), qui focalise les faisceaux lumineux provenant dudit premier système (151) sur l'élément de balayage (120).

6. Afficheur tête haute selon la revendication 5, dans lequel ledit deuxième sous-système (152) comprend au moins l'un des éléments suivants :

- un prisme ;
- un miroir.

7. Afficheur tête haute selon l'une quelconque des revendications 1 à 6, dans lequel ledit élément de mise au point (161 ; 162) comprend au moins un des éléments suivants :

- une lentille ;
- un miroir.

8. Dispositif d'affichage tête haute selon l'une quelconque des revendications 1 à 7, dans lequel ledit élément de focalisation (161) est positionné dans le trajet optique entre l'élément de balayage (120) et le dilatateur de pupille (130).

9. Dispositif d'affichage tête haute selon l'une quelconque des revendications 1 à 7, dans lequel ledit élément de focalisation (162) est positionné dans le trajet optique entre le dilatateur de pupille (130) et la plaque holographique (140).

10. Affichage tête haute selon les revendications 1 à 9, dans lequel ledit élément de focalisation (161 ; 162) est un miroir dont la surface est façonnée pour compenser un trajet optique hors axe.

11. Affichage tête haute selon l'une quelconque des revendications 1 à 10, dans lequel ledit système dispersif (150) est agencé pour disperser un faisceau lumineux (180) comprenant deux longueurs d'onde en deux faisceaux lumineux (182), chacun comprenant l'une desdites deux longueurs d'onde.

12. Dispositif d'affichage tête haute selon la revendication 11, dans lequel ledit système dispersif (150) est agencé pour faire en sorte que lesdits deux faisceaux lumineux (182) arrivent sur l'élément de balayage (120) avec deux angles d'incidence distincts.

13. Affichage tête haute selon l'une quelconque des revendications 11 à 12, lorsqu'elles dépendent des revendications 5 ou 6, dans lequel ledit deuxièmeme sous-système (152) est agencé pour faire en sorte que lesdits deux faisceaux lumineux (182) arrivent sur l'élément de balayage (120) sensiblement à la même position.

14. Affichage tête haute selon l'une quelconque des revendications 11 à 13, dans lequel ledit élément de focalisation est agencé pour focaliser lesdits deux faisceaux lumineux (182) sur la plaque holographique (140) sensiblement à la même position.

15. Afficheur tête haute selon la revendication 14, dans lequel lesdits deux faisceaux lumineux (182) sont incidents sur la lame holographique (140) avec deux angles d'incidence distincts, qui sont choisis pour remonter lesdits deux faisceaux lumineux en un seul faisceau lumineux (183) après la réflexion sur la lame holographique (140).

# Fig.1

# Fig.2

# Fig.3

**Fig.4**

**Fig.5**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3032316 A2
- US 2011164294 A1